# EUROPÄISCHE PATENTSCHRIFT

(11) **EP 3 428 748 B1**
(45) Veröffentlichungstag und Bekanntmachung des Hinweises auf die Patenterteilung: **26.08.2020**
(21) Anmeldenummer: 17181169.8
(22) Anmeldetag: 13.07.2017
(51) Int. Cl.: G05B 19/042, G05B 9/03

(54) **VERFAHREN UND ANORDNUNG ZUM BETRIEB VON ZWEI REDUNDANTEN SYSTEMEN**
METHOD AND ASSEMBLY FOR OPERATING TWO REDUNDANT SYSTEMS
PROCÉDÉ POUR AUGMENTER LA FIABILITÉ DE DEUX SYSTÈMES REDONDANTS EN DÉTECTANT LE SYSTÈME ENTACHÉ D'UN DÉFAUT

(43) Veröffentlichungstag der Anmeldung: 16.01.2019
(73) Patentinhaber: Siemens Aktiengesellschaft, 80333 München (DE)
(72) Erfinder: Grosch, Thomas, 90574 Roßtal (DE); Walter, Maximilian, 90408 Nürnberg (DE)

(56) Entgegenhaltungen:
- EP-A1- 3 048 497
- DE-A1-102012 012 521
- DE-B3-102010 039 607

## Beschreibung

Die Erfindung betrifft ein Verfahren zum Betrieb einer Anordnung mit zwei redundanten Systemen gemäß dem Oberbegriff des Patentanspruchs 1, und eine Anordnung mit zwei redundanten Systemen gemäß dem Oberbegriff des Patentanspruchs 7.

In der industriellen Automatisierungstechnik, aber auch in anderen technischen Gebieten, gibt es Einsatzfälle, in denen eine erhöhte Verfügbarkeit ("High Availability") gefordert wird. Im Gegensatz zur Manipulationssicherheit, die oft unter dem Oberbegriff "Security" zusammengefasst wird, geht es bei der "High Availability" primär darum, zufällige Ausfälle von Teilsystemen oder Komponenten zu beherrschen. Dabei soll insbesondere ein Ausfall eines Teil-Systems, insbesondere einer Steuerung (z.B. speicherprogrammierbare Steuerung, Steuerungs-Rechner etc.) erkannt und aufgefangen werden, und es sollen auch Störungen, die sich nicht gleich als kompletter Ausfall eines Systems sondern beispielsweise als Funktionsstörung feststellen lassen, als Fehlerfall erkannt und aufgefangen werden.

Zu diesem Zweck sind hochverfügbare Steuerungen bekannt, die über eine sog. zweifach strukturelle Redundanz verfügen. Bei diesen Anordnungen arbeiten zwei Systeme oder Steuerungen im Normalbetrieb gleichzeitig und prüfen regelmäßig wechselseitig die berechneten Ergebnisse. Stimmen die Ergebnisse nicht überein, wird versucht, die fehlerhafte Steuerung durch die Verwendung von zusätzlichen Diagnosemaßnahmen abzuschalten und erst nach Reparatur wieder in den Betrieb einzugliedern. Zumeist arbeitet eines der Systeme in einem produktiven Betrieb, was bedeutet, dass die Ergebnisse, insbesondere die Ansteuerung für Aktoren eines zu steuernden Prozesses, verwendet werden, während das "redundant" parallel betriebene System dieselben Berechnungen durchführt, jedoch dessen Ergebnisse dazu benötigt werden, das Ergebnis des jeweils anderen Systems zu überprüfen. Fällt das im Produktivbetrieb befindliche System aus oder werden Fehler festgestellt, kann nahezu verzögerungsfrei auf das redundante System, also das bislang im "Schattenbetrieb" ablaufende System, umgeschaltet werden. Werden Störungen in dem redundanten System (Schattensystem) festgestellt, verbleibt das bisherige Produktivsystem ("Master") in seiner Rolle und das fehlerhafte System wird abgeschaltet und beispielsweise neu gestartet oder repariert.

Eine Herausforderung bei einem solchen redundanten Parallelbetrieb besteht darin, zu erkennen, welches der Systeme oder Steuerungen fehlerhaft ist bzw. war. Die Güte dieser Erkennung hat einen großen Einfluss auf die letztliche erreichbare mittlere Zeit zwischen zwei Ausfällen (MTBF - meantime between failure) des Gesamtsystems, und damit unmittelbar auf die durch Ausfälle und/oder Störungen zurückzuführen Kosten.

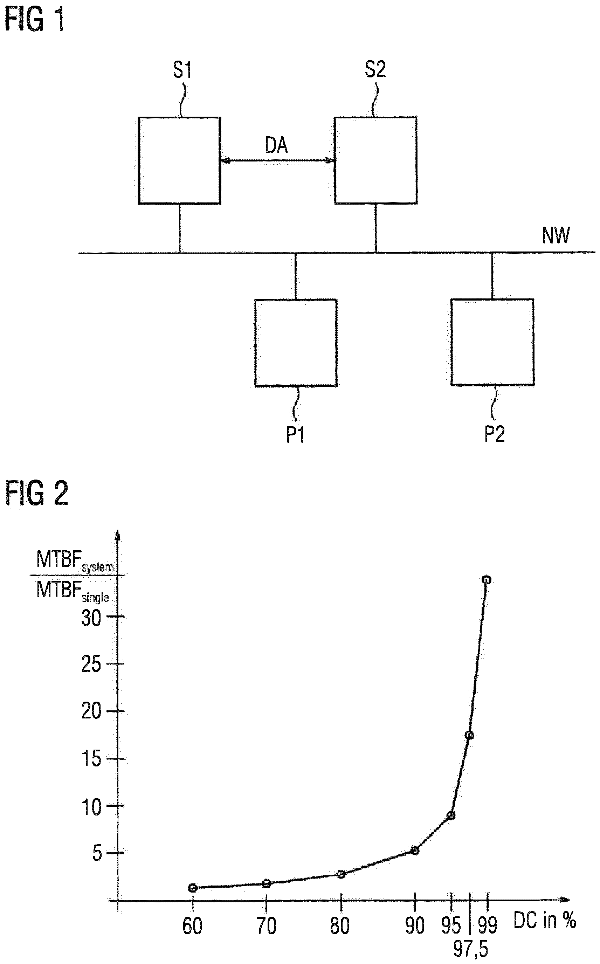

In der Figur 2 ist das Verhältnis der mittleren Zeit zwischen zwei Ausfällen (MTBF) eines redundanten Systems (MTBF_{system}) zu einem einfachen System (MTBF_{single}) in Abhängigkeit zum Fehlerüberdeckungsgrad (diagnostic coverage - DC) dargestellt. Bei einem niedrigen Fehlerüberdeckungsgrad (DC < 60%) ist das Verhältnis in etwa eins, was bedeutet, dass das redundante Gesamtsystem statistisch nicht besser ist, als ein einfaches, nicht-redundantes System. Die MTBF des redundanten Gesamtsystems wächst superlinear mit dem Fehlerüberdeckungsgrad (DC), wodurch klar wird, dass diesem eine herausragende Rolle bei der Verbesserung des Gesamtsystems zukommt. Die Abbildung in der Figur 2 setzt dabei ein Modell zugrunde, welches eine Markov-Kette mit drei Zuständen beschreibt, MTTF (meantime to failure) = 1000 h, MTTR (meantime to repair) = 4 h.

Falls also ohne weitere Informationen lediglich festgestellt wird, dass eine Abweichung zwischen dem Produktivsystem und dem Schattensystem vorliegt, bringt die Konstellation aus zwei parallel betriebenen Systemen keinen signifikanten Vorteil gegenüber einer Ein-System-Lösung, weil in der Hälfte der Fälle zufällig das defekte System weiterbetrieben wird. Eine bekannte, aber aufwändige Möglichkeit zur Verbesserung der Situation ist die Verwendung von drei, anstelle von zwei Systemen und dem Einsatz einer Mehrheitslogik ("Triple Modular Redundancy"). Solche Mehrheitslösungen sind jedoch aus nachvollziehbaren Gründen aufwändig und sollen daher in vielen Fällen vermieden werden.

Weiterhin kann eine große Anzahl von Fehlern durch nebenläufige Testprogramme mit bekanntem Ergebnis aufgedeckt werden. Dabei werden neben dem eigentlichen Anwendungsprogramm oder Automatisierungsprogramm auf jedem System weitere Aufgaben gelöst, beispielsweise arithmetische Aufgaben, Berechnungen oder dgl., wobei die Ergebnisse dieser Berechnungen schon im Vorhinein bekannt sind. Weicht das jeweilige Rechenergebnis von dem vorher bekannten Sollergebnis ab, kann auf einen Fehler in der jeweiligen Steuerungslogik oder dem jeweiligen System geschlossen werden. Diese Verfahren sind jedoch wenig geeignet, transiente "Einmal-Fehler" zu erkennen, also insbesondere Fehler, die nicht alle Operationen und Berechnungen in dem jeweiligen System betreffen.

In manchen Fällen können auch spezielle Sensoren, insbesondere Temperatursensoren, zur Aufdeckung von Fehlern in einzelnen Systemen verwendet werden.

Schlagen die zuvor erwähnten Mechanismen fehl, bleibt im erkannten Fehlerfall lediglich die willkürliche Auswahl (z.B. "zufällig" oder "Master arbeitete weiter, Reserve wird abgeschaltet"). Hier muss jedoch, wie bereits oben erwähnt, mit 50%iger Wahrscheinlichkeit davon ausgegangen werden, dass der noch intakte Knoten bzw. das noch intakte System abgeschaltet wird.

Die Druckschrift EP 3 048 497 A1 - Grosch et al. "Verfahren zum Betreiben eines redundanten Automatisierungssystems und redundantes Automatisierungssystem" zeigt bereits ein Verfahren zur Auswahl eines von zwei redundant aufgebauten Teilsystemen, wobei zur Entscheidung darüber, welches Teilsystem produktiv geschaltet wird, eine jeweilige Störungswahrscheinlichkeit der Teilsysteme berücksichtigt wird.

Es ist also eine Aufgabe der vorliegenden Erfindung, die Erkennung des fehlerhaften Systems bei zweifach redundanten Systemen zu verbessern.

Die erfindungsgemäße Lösung dieser Aufgabe basiert auf der Messung von Betriebsparametern, insbesondere einer sog. "Performance", einzelner Teile des Systemprogramms bzw. Anwenderprogramms des jeweiligen Systems. Für jedes System wird der Betriebsparameter oder werden die Betriebsparameter statistisch erfasst. Kommt es zu einer Abweichung zwischen den beiden Systemen (Master und Reserve bzw. Produktivsystem und Schattensystem), kann überprüft werden, ob in einem der Systeme der oder die zuletzt erfassten Betriebsparameter eine größere Abweichung zu den zuvor abgearbeiteten Zyklen aufweist. Dasjenige der Systeme, bei dem der aktuelle Betriebsparameter oder die aktuellen Betriebsparameter eine höhere Abweichung zu den statistischen Aufzeichnungen, beispielsweise einem Mittelwert des jeweils betrachteten Parameters aufweisen, wird als das wahrscheinlich gestörte System erkannt.

Die Aufgabe wird insbesondere durch ein Verfahren gemäß dem Patentanspruch 1 und durch eine Anordnung gemäß dem Patentanspruch 7 gelöst.

Dabei ist zur Lösung der Aufgabe ein Verfahren zum Betrieb einer Anordnung mit zwei redundanten Systemen vorgesehen, insbesondere von zwei industriellen Automatisierungskomponenten, wobei die zwei Systeme jeweils in einem zyklischen Betrieb parallel arbeiten, wobei jeweils eines der Systeme in einem Produktivbetrieb arbeitet und das andere der Systeme zur Kontrolle dieselbe Aufgabe abarbeitet, wobei die Systeme regelmäßig zumindest ein Ergebnis des jeweils anderen Systems überprüfen, insbesondere jeweils das Ergebnis des anderen Systems der beiden Systeme mit dem eigenen Ergebnis vergleichen, und wobei bei einer erkannten Abweichung der Ergebnisse voneinander ein Fehler erkannt wird, wobei im Fehlerfall eines der Systeme für den Produktivbetrieb ausgewählt oder bestätigt wird. Dabei wird für jedes der Systeme in mehreren oder allen Zyklen jeweils zumindest eine Kenngröße über einen Betriebsparameter erfasst und zur Aktualisierung zumindest eines statistischen Parameters jeweils verwendet, wobei zumindest in dem Fall, in dem eine Abweichung der Ergebnisse der beiden Systeme festgestellt wird, für jedes System ein aktueller Betriebsparameter mit dem zugehörigen statistischen Parameter desselben Systems in Bezug gesetzt wird, und wobei dasjenige System, bei dem der jeweilige aktuelle Betriebsparameter weniger von dem zugehörigen statistischen Parameter abweicht, als das ordnungsgemäß funktionierende System erkannt und für den weiteren Produktivbetrieb verwendet wird. Durch dieses Verfahren ist es möglich, den Fehlerüberdeckungsgrad (DC = Diagnostic Coverage) zu erhöhen und damit die Verfügbarkeit des Gesamtsystems zu erhöhen.

Die Aufgabe wird außerdem durch eine Anordnung mit zwei redundanten Systemen gelöst, insbesondere mit zwei industriellen Automatisierungskomponenten, wobei vorgesehen ist, dass die zwei Systeme in einem zyklischen Betrieb parallel arbeiten, wobei jeweils eines der Systeme in einem Produktivbetrieb geschaltet ist und das andere System zur Kontrolle zur Abarbeitung derselben Aufgabe vorgesehen ist, wobei vorgesehen ist, dass die Systeme wechselseitig Ergebnisse des jeweils anderen Systems einmal oder regelmäßig überprüfen, insbesondere indem jeweils das Ergebnis des jeweils anderen der beiden Systeme mit dem eigenen Ergebnis verglichen wird, und wobei vorgesehen ist, dass bei einer erkannten Abweichung der Ergebnisse voneinander ein Fehler erkannt wird, wobei vorgesehen ist, dass im Fehlerfall eines der Systeme für den weiteren Produktivbetrieb ausgewählt oder für den Produktivbetrieb bestätigt wird. Dabei wird für jedes der Systeme in mehreren oder allen Zyklen jeweils zumindest eine Kenngröße über einen Betriebsparameter erfasst und zur Aktualisierung zumindest eines statistischen Parameters jeweils verwendet, wobei zumindest in dem Fall, in dem eine Abweichung der Ergebnisse der beiden Systeme festgestellt wird, für jedes System ein aktueller Betriebsparameter mit dem zugehörigen statistischen Parameter desselben Systems in Bezug gesetzt wird, und wobei dasjenige System, bei dem der jeweilige aktuelle Betriebsparameter weniger von dem zugehörigen statistischen Parameter abweicht, als das ordnungsgemäß funktionierende System erkannt und für den Produktivbetrieb verwendet wird. Mit einer solchen Anordnung können die bereits anhand des erfindungsgemäßen Verfahrens diskutierten Vorteile erreicht werden.

Vorteilhafte Ausgestaltungen des erfindungsgemäßen Verfahrens bzw. der erfindungsgemäßen Anordnung sind in den abhängigen Patentansprüchen angegeben. Die dabei beschriebenen Merkmale und deren Vorteile können sowohl einzeln, als auch in sinnvoller Kombination miteinander angewendet werden.

Die wechselweise Kontrolle findet mindestens einmal, vorzugsweise aber regelmäßig, insbesondere nach jedem Zyklus eines zyklusorientierten Programms (z.B. Automatisierungsanwendung) statt. In einer vorteilhaften Ausgestaltung kann ein Benutzer Art und Häufigkeit des Daten-Vergleichs administrieren, insbesondere zeitgesteuert, zyklusgesteuert oder eventgesteuert.

Als ein Betriebsparameter kann vorteilhaft eine Programmlaufzeit, insbesondere die Laufzeit zur Abarbeitung eines kompletten Zyklus oder eines Programmteils (z.B. Funktionsbausteine), welcher vorteilhaft bei jedem Zyklus zwingend durchlaufen wird, verwendet werden. Eine solche Programmlaufzeit bzw. Zyklendauer ist leicht und ohne viel Einfluss auf die System-Performance zu erfassen, wobei man davon ausgeht, dass bei einer signifikant abweichenden Laufzeit bzw. Ausführungsdauer als im statistischen Mittel eine Störung vorliegt. Reguläre Abweichungen in der Ausführungsdauer, die beispielsweise durch eine reguläre, komplexe Berechnung oder durch eine geänderte Ablaufstruktur durch bedingte Verzweigungen oder dgl. regulär vorkommen können, werden dabei nicht missinterpretiert, weil eben die statistischen Abweichungen auf beiden Systemen miteinander verglichen werden, so dass bei regulären Laufzeitveränderungen diese bei beiden Systemen gleichermaßen zu Abweichungen der derzeitigen, aktuellen Programmlaufzeit gegenüber dem statistischen Mittel führen und somit keinen Fehler bei regulärer Funktion fälschlicherweise melden. Dies gilt auch für Abweichungen bei anderen Betriebsparametern.

Vorteilhaft kann als ein Betriebsparameter ein sog. "Performance-Zähler" verwendet werden, wobei solche Performance-Zähler für eine Vielzahl von Betriebssystemen und Architekturen bereit zur Verfügung stehen (siehe:
http://www.intel.com/software/pcm). Erfindungsgemäß macht man sich dabei die Erkenntnis zunutze, dass eine geänderte Leistungsfähigkeit eines Systems auf Störungen in der Software oder der Hardware beruhen können, so dass temporäre Abweichungen in diesen Leistungskennzahlen bei beiden Systemen verglichen werden können und dabei ein Hinweis darauf liefern können, welches der Systeme gestört ist und welches regulär arbeitet. Erfindungsgemäß wird davon ausgegangen, dass dasjenige System, welches die größeren Veränderungen in Leistungskennzahlen gegenüber dem statistischen Durchschnitt aufweist, wahrscheinlich das gestörte System ist.

Vorteilhaft wird nicht nur ein einzelner Betriebsparameter, beispielswese eine Laufzeitangabe oder eine Leistungskennzahl, als Betriebsparameter beobachtet, sondern es wird eine Vielzahl von Kenngrößen erfasst, wobei diese Vielzahl von Kenngrößen entweder zu einem Satz statistischer Parameter, insbesondere einem Parameter-Vektor oder einer Parameter-Matrix zusammengefasst werden können, oder aber zu einem einzigen, gesamten statistischen Parameter zusammengefasst werden. Mit der Anzahl der verarbeiteten Kenngrößen, Leistungskennzahlen, Laufzeitangaben etc. steigt die Wahrscheinlichkeit, dass Anomalien erkannt werden können. Die Zusammenfassung zu einzelnen statistischen Parametern bzw. Parameter-Vektoren sorgt dabei dafür, dass am Ende eines Zyklus' der Vergleich der aktuellen Betriebsparameter mit den lokalen statistischen Parametern einerseits und der Vergleich der Abweichung des Produktivsystems mit der Abweichung, die in dem Schattensystem ermittelt wird, möglichst einfach und schnell erfolgen kann.

Zur Erfassung kurzzeitiger, transienter Störungen ist es vorteilhaft, wenn in vielen Programmblöcken Betriebsparameter erfasst werden und somit in den statistischen Vergleich eingehen. Vorteilhaft werden dabei jedoch bevorzugt solche Programmteile betrachtet, die möglichst bei jedem Zyklus abgearbeitet werden, wodurch Abweichungen, die durch die sporadische Abarbeitung selten genutzter Verzweigungen und Programmteile entstehen, weniger in das Ergebnis eingehen werden.

Zur Generierung bzw. Erfassung von Betriebsparametern wird der Programmcode des Anwenderprogramms und vorteilhaft auch eines Betriebssystems bzw. einer Firmware mit Befehlen, also Programmbefehlen, zur Erzeugung bzw. Erfassung der Betriebsparameter versehen. Die Generierung kann alternativ aber auch durch das Betriebssystem erfolgen.

Das erfindungsgemäße Verfahren wird nachfolgend anhand eines Ausführungsbeispiels erläutert; das Ausführungsbeispiel dient gleichzeitig der Erläuterung einer erfindungsgemäßen Anordnung.

Dabei zeigen:
- Figur 1: in schematischer Darstellung zwei redundant betriebene Systeme, die über ein Netzwerk mit zwei Produktionsmitteln verknüpft sind, und
- Figur 2: die Abhängigkeit der Verfügbarkeit einer Anordnung aus zwei Systemen gegenüber einem Einzelsystem in Abhängigkeit von einem Fehlerüberdeckungsgrad.

In der Figur 1 sind zwei Systeme S1, S2 (auch "Knoten" genannt) dargestellt, die in einen redundanten Betrieb parallel arbeiten. Über ein Netzwerk NW, beispielsweise ein Automatisierungsnetzwerk, sind die Systeme S1, S2 mit Produktionseinheiten P1, P2 und auch miteinander für einen Datenaustausch DA verbunden, wobei die Produktionseinheiten P1, P2 von den Systemen S1, S2 gesteuert werden. Es wird angenommen, dass eines der Systeme S1, S2 im Produktivbetrieb (Master) arbeitet, also tatsächlich die Produktionseinrichtung P1, P2 steuert, während das andere der Systeme S1, S2 in einem Schattenbetrieb (Slave) dieselbe Software (Betriebssystem, Anwendungsprogramm, Automatisierungsprogramm) unter Verwendung derselben Eingangsdaten (z.B. Prozessparameter, Messwerte) abarbeitet, die Ergebnisse jedoch nur zur Kontrolle des jeweils anderen der Systeme S1, S2 verwendet werden. Fällt eines der Systeme S1, S2 aus, bzw. wird als fehlerhaft erkannt, übernimmt das jeweils andere der Systeme S1, S2 den Produktivbetrieb bzw. führt diesen fort, während das fehlerhafte der Systeme S1, S2 repariert wird, beispielsweise durch einen Neustart.

In der Figur 2 ist das Verhältnis der mittleren Zeit zwischen zwei Ausfällen (MTBF) eines redundanten Systems (MTBF_{system}) zu einem einfachen System (MTBF_{single}) in Abhängigkeit zum Fehlerüberdeckungsgrad (diagnostic coverage-DC) dargestellt. Wie bereits eingangs beschrieben, ist der Fehlerüberdeckungsgrad (DC) und somit die Sicherheit der Diagnose, welches der voneinander abweichenden Systeme S1, S2 fehlerhaft ist, für die Erhöhung der Betriebssicherheit bzw. Verfügbarkeit des Gesamtsystems essentiell.

Das erfindungsgemäße Verfahren basiert auf der Messung der Performance einzelner Teile des Betriebssystems, oder der Firmware (Systemprogramme) und/oder des Anwenderprogramms. Da das Anwenderprogramm in der Regel die fehleranfälligste Software-Komponente ist und sich zudem am leichtesten mit Diagnose-Anweisungen versehen lässt, wird meist das Anwendungsprogramm in den Fokus der hier betrachteten Untersuchungen gerückt. Es werden dabei Betriebsparameter erfasst. Dazu kann die Laufzeit gemessen werden, und/oder es werden sog. Performance-Zähler des jeweiligen (einzelnen) Systems S1, S2 ermittelt, die eine moderne CPU üblicherweise zur Verfügung stellt.

Das Ausführungsbeispiel geht von speicherprogrammierbaren Steuerungen als betrachtete Systeme S1, S2 aus, wobei diese in Zyklen eine Automatisierungsaufgabe (z.B. Fertigungssteuerung oder Prozessautomatisierung) abarbeiten. Pro Zyklus werden ca. 10-1000 dieser Messwerte für Betriebsparameter ermittelt und daraus im Normalfall am Ende des Zyklus auf jedem der beiden Knoten abgeleitete Größen, sogenannte statistische Parameter, berechnet. In einem einfachen Fall sind das Mittelwert und Varianz für jeden Messwert eines Betriebsparameters.

Im Fehlerfall, d.h. wenn der gegenseitige Vergleich der beiden Systeme S1, S2 bzw. Knoten fehlschlägt oder Diskrepanzen zeigt, nutzt jedes der beiden Systeme S1, S2 bzw. jeder der Knoten die zuvor berechneten abgeleiteten Größen, also die statistischen Parameter, um zu ermitteln, ob die aktuellen Messwerte der Betriebsparameter auf eine Anomalie, d.h. einen Fehler schließen lassen. Die Abweichung des aktuellen Messwertes eines Betriebsparameters von seinem fortlaufend aktualisierten statistischen Parameter ist dabei ein sog. "Anomaliewert". Hat eines der Systeme S1, S2 bzw. Knoten einen sehr viel höheren Anomaliewert berechnet, als das andere, ist es sinnvoll, dieses System abzuschalten oder aus dem Produktivbetrieb zu entfernen, und das andere System im Produktivbetrieb weiterlaufen zu lassen bzw. vom Schattenbetrieb in den Produktivbetrieb zu überführen. Für den Vergleich kann ein Datenaustausch DA zwischen den Systemen S1, S2 (falls die Systeme S1, S2 sich gegenseitig überwachen) oder zwischen jedem System S1, S2 und einer Auswerteinstanz (in den Figuren nicht dargestellt) vorgesehen werden.

Die Verwendung des Vergleichs der Anomaliewerte als Auswahlkriterium kann dadurch begründet werden, dass viele Fehler, insbesondere Hardware-Fehler, einen Einfluss auf die Performance eines oder mehrerer Programmteile haben werden. Dafür seien hier einige Beispiele angeführt:
- Ein Fehler in der Speicherzugriffseinheit (MMU) führt zum Zugriff auf eine fehlerhafte Adressen. Mit hoher Wahrscheinlichkeit befinden sich diese nicht im Cache. Dadurch steigt die Cache-Fehlerrate und somit die Programmlaufzeit.

- Durch einen Fehler im Rechenwerk werden eine Rechenoperationen zu früh beendet, was zu einem veränderten Laufzeitverhalten führt.
- Durch einen Fehler im Leitwerk oder eine Verfälschung von Schleifenzählern wird nicht die korrekte Anzahl an Schleifendurchläufen ausgeführt, was zu einem veränderten Laufzeitverhalten führt.
- Durch die Verfälschung eines Prozesswertes werden "selten durchlaufene" Programmteile ausgeführt, was zu einem ungewöhnlichem Laufzeitverhalten führt.
- Auch eine Verfälschung des Programms führt üblicherweise zu Veränderungen der Laufzeit.

Zusammen mit der Gewissheit, dass mindestens eines der beiden Systeme S1, S2 / Knoten fehlerhaft sein muss, ist eine hohe Anomalie im Laufzeitverhalten also ein starkes Indiz dafür, dass ein Fehlverhalten vorliegt. Dabei werden die aktuellen Anomaliewerte beider Systeme S1, S2 verglichen, um im Fehlerfall dasjenige System zu bestimmen, welches mit höherer Wahrscheinlichkeit das fehlerhafte bzw. gestörte System ist. Damit wirken sich reguläre Schwankungen der Betriebsparameter nicht auf die Entscheidung aus, weil diese im störungsfreien Betrieb bei beiden Systemen S1, S2 gleichermaßen auftreten.

Durch die vorgeschlagenen Maßnahmen kann die Wahrscheinlichkeit eines Abschaltens des falschen Knotens von z.Zt. 50% deutlich gesenkt werden kann. Man beachte, dass eine Absenkung auf lediglich 30% bereits zu einer deutlichen Steigerung der MTBF (und damit zur Senkung der ausfallbedingten Kosten für einen Betreiber) führen würde - siehe dazu auch Figur 2.

Ein konkretes Ausführungsbeispiel geht davon aus, dass sich das zyklisch ausgeführte Programm auf oberster Ebene in eine geeignete Zahl (ca. 10-1000) sequentiell ausgeführter Blöcke zerlegen lässt. Dies bedeutet, dass Schleifen und Fallunterscheidungen nur innerhalb dieser Blöcke vorkommen. Die Blöcke können Systemfunktionen beinhalten (z.B. Treiberaufrufe) oder vom Anwender programmierte Funktionen (z.B. Auslesen und Verarbeiten von Sensordaten, Vergleich von Daten untereinander und gegen konstanten Sollwerten, Boolesche Verknüpfung der Vergleichsergebnisse, Berechnung von Steuerwerten, usw.).

Jeder Programmblock wird durch die Generierkette (z.B. Engineeringsystem, insbesondere Compiler) dahingehend instrumentiert, dass für diesen Block in jedem Zyklus ein oder mehrere Messwerte (Laufzeit, Anzahl Cachetreffer, ...) erzeugt werden. Insgesamt werden in einem Zyklus für alle Blöcke N Messwerte (x_1 bis x_N) generiert.

Für jeden Messwert x_i werden darüber hinaus die zwei Variablen M_i und S_i angelegt, die den Mittelwert und die Varianz des Wertes speichern. Diese Werte werden (für alle i von 1...N) nach dem ersten Zyklus wie folgt initialisiert:

```
 init_i(in x_i,out M_i, out S_i){
     M_i := x_i;
     S_i := 0;}
```

Ab dem zweiten Zyklus werden die Werte wie folgt aktualisiert (Funktion "update"), wobei die Variable k ein globaler Zykluszähler ist:

```
 update_i(in k,inout M_i, inout S_i) {
     Mlast := M_i;
     M_i := Mlast + (x_i-Mlast)/k;
     S_i := S_i + (x_i-Mlast)*(x_i-M_i); }
```

Bei dieser Aktualisierung handelt es sich um Rekurrenzgleichungen für den Mittelwert und die Varianz, vgl. D. Knuth: The Art of Computer Programming, 3rd Ed., Kap. 4.2.2., S.232. Man beachte, dass S_i hierbei nie negativ werden kann.

Kommt es zu einem Fehler (d.h. die Ausgabe von Master und Reserve bzw. Produktivsystem und Schattensystem stimmen nicht überein), kann jeder der beiden Knoten die "Anomalie-Werte" der zuletzt gemessenen Werte berechnen. An Stelle der Funktion "update" wird dann die Funktion "calcAnomalyValue" (wieder für alle i von 1 ... N) aufgerufen:

```
     calcAnomalyValue(in x_i, M_i, S_i, out aValue_i) {
          squaredDiff := (M_i-x_i)*(M_i-x_i);
          if(S_i <= epsilon) aValue_i := MAX_A_VALUE;
          else aValue_i := squaredDiff / S_i; }
```

Je höher der aktuelle Wert x_i vom durchschnittlichen Wert M_i abweicht, desto höher ist seine Anomalie, wobei Werte mit einer hohen Varianz S_i weniger stark gewichtet werden.

Durch Aufaddieren der Werte aValue_i kann jeder der beiden Knoten für sich einen Gesamt-Anomalie-Wert berechnen. Im Zweifel wird der Knoten mit dem höheren Wert abgeschaltet, dazu kann durch einen Datenaustausch DA der eigene Anomaliewert an den Nachbarknoten übermittelt werden, und umgekehrt. In einer vorteilhaften Variante entscheidet ein Knoten selbst (sofern er noch betriebsfähig ist), ob er abgeschaltet / repariert werden muss, oder weiterbetrieben werden kann. In einer anderen Variante übernimmt diese Entscheidung anhand der festgestellten Anomaliewerte eine zentrale Instanz, beispielsweise eine zentrale Betriebssteuerung, eine "Watchdog"-Einrichtung o.ä.

In dem Ausführungsbeispiel kann die statistische Auswertung der Betriebsparameter weiter verfeinert werden, beispielsweise durch eine Berücksichtigung der Verteilungsfunktion für einzelne x_i oder eine Berücksichtigung von Abhängigkeiten zwischen den x_i, die zum selben Programmabschnitt gehören. Weiter kann eine Berücksichtigung von Abhängigkeiten zwischen x_i unterschiedlicher Programmabschnitten erfolgen. Ferner kann eine historische Entwicklung eines x_i erfolgen, wobei es auch möglich ist, Abhängigkeiten zu den aktuellen und historischen Prozesseingabewerten zu berücksichtigen.

## Patentansprüche

1. Verfahren zum Betrieb einer Anordnung mit zwei redundanten Systemen (S1, S2),
insbesondere von zwei industriellen Automatisierungskomponenten,
wobei die zwei Systeme (S1, S2) jeweils in einem zyklischen Betrieb parallel arbeiten,
wobei jeweils eines der Systeme (S1, S2) in einem Produktivbetrieb arbeitet und das andere der Systeme (S1, S2) zur Kontrolle dieselbe Aufgabe abarbeitet,
wobei die Systeme (S1, S2) wechselseitig zumindest ein Ergebnis der Aufgabe des jeweils anderen Systems regelmäßig überprüfen,
insbesondere jeweils das Ergebnis der Aufgabe des anderen Systems der beiden Systeme (S1, S2) mit dem eigenen Ergebnis vergleichen, und
wobei bei einem erkannten Fehler oder insbesondere bei einer erkannten Abweichung der Ergebnisse voneinander ein Fehlerfall festgestellt wird, wobei im festgestellten Fehlerfall eines der Systeme (S1, S2) für den Produktivbetrieb ausgewählt oder bestätigt wird,
**dadurch gekennzeichnet,**
**dass** für jedes der Systeme (S1, S2) in mehreren oder allen Zyklen jeweils zumindest eine Kenngröße über einen Betriebsparameter erfasst und zur Aktualisierung zumindest eines statistischen Parameters jeweils verwendet wird,
**dass** zumindest in dem Fall, in dem eine Abweichung der Ergebnisse der beiden Systeme (S1, S2) festgestellt wird, für jedes System (S1, S2) ein aktueller Betriebsparameter mit dem zugehörigen statistischen Parameter in Bezug gesetzt wird, und
**dass** dasjenige System (S1, S2), bei dem der jeweilige aktuelle Betriebsparameter weniger von dem zugehörigen statistischen Parameter abweicht, als das ordnungsgemäß funktionierende System (S1, S2) erkannt und für den Produktivbetrieb verwendet wird.

2. Verfahren nach Patentanspruch 1,
**dadurch gekennzeichnet,**
**dass** als der Betriebsparameter eine Programmlaufzeit, insbesondere eine Laufzeit zur Abarbeitung eines kompletten Zyklus oder eines bei einem Zyklus jeweils abgearbeiteten Programmteils verwendet wird.

3. Verfahren nach einem der vorhergehenden Patentansprüche,
**dadurch gekennzeichnet,**
**dass** als der Betriebsparameter zumindest ein Performance-Zähler zur Angabe einer Leistungskennzahl des jeweiligen Systems (S1, S2) verwendet wird.

4. Verfahren nach einem der vorhergehenden Patentansprüche,
**dadurch gekennzeichnet,**
**dass** eine Vielzahl von Kenngrößen als Betriebsparameter erfasst und zu einem Satz statistischer Parameter oder zu einem einzigen gesamten statistischen Parameter zusammengefasst werden.

5. Verfahren nach einem der vorhergehenden Patentansprüche,
**dadurch gekennzeichnet,**
**dass** in einem Anwendungsprogramm der Systeme (S1, S2), welches bei jedem Zyklus abgearbeitet wird, Befehle zur Erfassung des oder der Betriebsparameter eingefügt werden.

6. Verfahren nach Patentanspruch 5,
**dadurch gekennzeichnet,**
**dass** die Befehle in einer Anzahl von Programmblöcken, die unabhängig von Verzweigungen oder Bedingungen bei jedem Zyklus abgearbeitet werden, eingefügt werden.

7. Anordnung mit zwei redundanten Systemen (S1, S2), insbesondere mit zwei industriellen Automatisierungskomponenten, wobei vorgesehen ist,
dass die zwei Systeme in einem zyklischen Betrieb parallel arbeiten,
wobei jeweils eines der Systeme (S1, S2) in einem Produktivbetrieb geschaltet ist und das andere System (S1, S2) zur Kontrolle zur Abarbeitung derselben Aufgabe vorgesehen ist, wobei vorgesehen ist, dass die Systeme (S1, S2) wechselseitig Ergebnisse des jeweils anderen Systems (S1, S2) regelmäßig überprüfen, insbesondere indem jeweils das Ergebnis der Aufgabe des jeweils andren der beiden Systeme (S1, S2) mit dem eigenen Ergebnis der Aufgabe verglichen wird,
und wobei vorgesehen ist, dass bei einem erkannten Fehler oder insbesondere bei einer erkannten Abweichung der Ergebnisse voneinander ein Fehlerfall festgestellt wird,
wobei vorgesehen ist, dass im Fehlerfall eines der Systeme (S1, S2) für den Produktivbetrieb ausgewählt oder für den Produktivbetrieb bestätigt wird,
**dadurch gekennzeichnet,**
**dass** weiterhin vorgesehen ist,
**dass** für jedes der Systeme (S1, S2) in mehreren oder allen Zyklen jeweils zumindest eine Kenngröße über einen Betriebsparameter erfasst und zur Aktualisierung zumindest eines statistischen Parameters jeweils verwendet wird,
**dass** zumindest in dem Fall, in dem eine Abweichung der Ergebnisse der beiden Systeme (S1, S2) festgestellt wird, für jedes System (S1, S2) ein aktueller Betriebsparameter mit dem zugehörigen statistischen Parameter in Bezug gesetzt wird, und
**dass** dasjenige System (S1, S2), bei dem der jeweilige aktuelle Betriebsparameter weniger von dem zugehörigen statistischen Parameter abweicht, als das ordnungsgemäß funktionierende System (S1, S2) erkannt und für den Produktivbetrieb verwendet wird.

8. Anordnung nach Patentanspruch 7,
**dadurch gekennzeichnet,**
**dass** vorgesehen ist,
**dass** als der Betriebsparameter eine Programmlaufzeit, insbesondere eine Laufzeit zur Abarbeitung eines kompletten Zyklus oder eines bei einem Zyklus jeweils abgearbeiteten Programmteils verwendet wird.

9. Anordnung nach einem der Patentansprüche 7 oder 8,
**dadurch gekennzeichnet,**
**dass** vorgesehen ist,
**dass** als der Betriebsparameter zumindest ein Performance-Zähler zur Angabe einer Leistungskennzahl des jeweiligen Systems (S1, S2) verwendet wird.

10. Anordnung nach einem der Patentansprüche 7 bis 9,
**dadurch gekennzeichnet,**
**dass** vorgesehen ist,
**dass** eine Vielzahl von Kenngrößen als Betriebsparameter erfasst und zu einem Satz statistischer Parameter oder zu einem einzigen gesamten statistischen Parameter zusammengefasst werden.

11. Anordnung nach einem der Patentansprüche 7 bis 10,
**dadurch gekennzeichnet,**
**dass** vorgesehen ist,
**dass** in einem Anwendungsprogramm der Systeme (S1, S2), welches bei jedem Zyklus abgearbeitet wird, Befehle zur Erfassung des oder der Betriebsparameter eingefügt werden.

12. Anordnung nach Patentanspruch 11,
**dadurch gekennzeichnet,**
**dass** vorgesehen ist,
**dass** die Befehle in einer Anzahl von Programmblöcken, die unabhängig von Verzweigungen oder Bedingungen bei jedem Zyklus abgearbeitet werden, eingefügt werden.

## Claims

1. Method for operating an arrangement having two redundant systems (S1, S2),
in particular having two industrial automation components, wherein the two systems (S1, S2) each operate in parallel in a cyclic mode,
wherein one of the systems (S1, S2) operates in a productive mode each time and the other system (S1, S2) executes the same task for checking purposes,
wherein the systems (S1, S2) reciprocally check at least one result of the task of the respective other system on a regular basis,
in particular each compare the result of the task of the other system of the two systems (S1, S2) with their own result, and wherein a detected fault or in particular a detected disparity among the results leads to a fault situation being found, with one of the systems (S1, S2) being selected or confirmed for the productive mode in the fault situation found,
**characterized**
**in that** at least one respective characteristic variable concerning an operating parameter is picked up for each of the systems (S1, S2) in multiple or all cycles and used for updating at least one statistical parameter each time,
**in that** at least when a disparity between the results of the two systems (S1, S2) is found, a current operating parameter is correlated with the associated statistical parameter for each system (S1, S2), and
**in that** the system (S1, S2) for which the respective current operating parameter differs from the associated statistical parameter less is detected as the correctly operating system (S1, S2) and used for the productive mode.

2. Method according to Patent Claim 1,
**characterized**
**in that** the operating parameter used is a program runtime, in particular a runtime for executing a complete cycle or a program part executed in a cycle each time.

3. Method according to either of the preceding patent claims, **characterized**
**in that** the operating parameter used is at least one performance counter for specifying a performance index of the respective system (S1, S2).

4. Method according to one of the preceding patent claims, **characterized**
**in that** a multiplicity of characteristic variables are picked up as operating parameters and combined to form a set of statistical parameters or to form a single overall statistical parameter.

5. Method according to one of the preceding patent claims, **characterized**
**in that** commands for picking up the operating parameter(s) are inserted in an application program of the systems (S1, S2) that is executed in each cycle.

6. Method according to Patent Claim 5,
**characterized**
**in that** the commands are inserted in a number of program blocks that are executed independently of branches or conditions in each cycle.

7. Arrangement having two redundant systems (S1, S2), in particular having two industrial automation components, wherein there is provision
for the two systems to operate in parallel in a cyclic mode, wherein one of the systems (S1, S2) is switched to a productive mode each time and the other system (S1, S2) is provided for executing the same task for checking purposes,
wherein there is provision for the systems (S1, S2) to reciprocally check results of the respective other system (S1, S2) on a regular basis, in particular by virtue of the respective result of the task of the respective other of the two systems (S1, S2) being compared with their own result of the task,
and wherein there is provision for a detected fault or in particular a detected disparity among the results to lead to a fault situation being found,
wherein there is provision for one of the systems (S1, S2) to be selected for the productive mode or confirmed for the productive mode in the fault situation,
**characterized**
**in that** there is additionally provision
for at least one respective characteristic variable concerning an operating parameter to be picked up for each of the systems (S1, S2) in multiple or all cycles and used for updating at least one statistical parameter each time,
for, at least when a disparity between the results of the two systems (S1, S2) is found, a current operating parameter to be correlated with the associated statistical parameter for each system (S1, S2), and
for the system (S1, S2) for which the respective current operating parameter differs from the associated statistical parameter less to be detected as the correctly operating system (S1, S2) and used for the productive mode.

8. Arrangement according to Patent Claim 7,
**characterized**
**in that** there is provision
for the operating parameter used to be a program runtime, in particular a runtime for executing a complete cycle or a program part executed in a cycle each time.

9. Arrangement according to either of Patent Claims 7 and 8, **characterized**
**in that** there is provision
for the operating parameter used to be at least one performance counter for specifying a performance index of the respective system (S1, S2).

10. Arrangement according to one of Patent Claims 7 to 9, **characterized**
**in that** there is provision
for a multiplicity of characteristic variables to be picked up as operating parameters and combined to form a set of statistical parameters or to form a single overall statistical parameter.

11. Arrangement according to one of Patent Claims 7 to 10, **characterized**
**in that** there is provision
for commands for picking up the operating parameter(s) to be inserted in an application program of the systems (S1, S2) that is executed in each cycle.

12. Arrangement according to Patent Claim 11,
**characterized**
**in that** there is provision
for the commands to be inserted in a number of program blocks that are executed independently of branches or conditions in each cycle.

## Revendications

1. Procédé pour faire fonctionner un agencement ayant deux systèmes ( S1, S2 ) redondants,
notamment deux composants d'automatisation industriels,
dans lequel les deux systèmes ( S1, S2 ) travaillent en parallèle chacun suivant un fonctionnement cyclique,
dans lequel, respectivement, l'un des systèmes ( S1, S2 ) travaille dans un fonctionnement productif et l'autre des systèmes ( S1, S2 ) achève le travail pour le contrôle de cette tâche,
dans lequel les systèmes ( S1, S2 ) contrôlent régulièrement, réciproquement, au moins un résultat de la tâche de l'autre système,
en comparant notamment le résultat de la tâche de l'autre système des deux systèmes ( S1, S2 ) à son propre résultat, et dans lequel, lorsqu'un défaut est détecté, ou notamment lorsqu'un écart est détecté entre les résultats, on constate un cas de défaut, dans lequel, lorsqu'un cas de défaut est constaté, on sélectionne ou on confirme l'un des systèmes ( S1, S2 ) pour le fonctionnement productif,
**caractérisé**
**en ce que**, pour chacun des systèmes ( S1, S2 ), on relève dans plusieurs cycles ou dans tous les cycles, respectivement, au moins une grandeur caractéristique sur un paramètre de fonctionnement et on l'utilise pour la mise à jour d'au moins un paramètre statistique,
**en ce que**, au moins dans le cas où l'on constate un écart de résultat entre les deux systèmes ( S1, S2 ), on met en rapport, pour chaque système ( S1, S2 ), un paramètre de fonctionnement en cours avec le paramètre statistique associé, et
**en ce que** le système ( S1, S2 ), pour lequel le paramètre de fonctionnement en cours s'écarte le moins du paramètre statistique associé, est détecté comme le système ( S1, S2 ) fonctionnant en bon ordre et est utilisé pour le fonctionnement productif.

2. Procédé suivant la revendication 1,
**caractérisé**
**en ce que**, comme paramètre de fonctionnement, on utilise un temps de déroulement d'un programme, notamment un temps de déroulement pour l'élaboration d'un cycle complet ou d'une partie d'un programme élaborée, respectivement, dans un cycle.

3. Procédé suivant l'une des revendications précédentes,
**caractérisé**
**en ce que** l'on utilise comme paramètre de fonctionnement au moins un indicateur de performance pour indiquer un indice de puissance du système ( S1, S2 ) respectif.

4. Procédé suivant l'une des revendications précédentes,
**caractérisé**
**en ce que** l'on relève une pluralité de grandeurs caractéristiques comme paramètres de fonctionnement et on les rassemble en un jeu de paramètres statistiques ou en un paramètre statistique d'ensemble unique.

5. Procédé suivant l'une des revendications précédentes,
**caractérisé**
**en ce que**, dans un programme d'application, l'on insère au système ( S1, S2 ), qui est élaboré à chaque cycle, les instructions de détection du ou des paramètres de fonctionnement.

6. Procédé suivant la revendication 5,
**caractérisé**
**en ce que** l'on insère les instructions dans un certain nombre de blocs de programme, qui sont élaborés indépendamment de bifurcations ou de conditions dans chaque cycle.

7. Agencement ayant deux systèmes ( S1, S2 ) redondants, notamment ayant deux composants d'automatisation industriels, dans lequel il est prévu,
que les deux systèmes travaillent en parallèle suivant un fonctionnement cyclique,
dans lequel, respectivement, l'un des systèmes ( S1, S2 ) est dans un fonctionnement productif et l'autre système ( S1, S2 ) est prévu pour la commande du déroulement de la même tâche, dans lequel il est prévu que les systèmes ( S1, S2 ) contrôlent régulièrement, réciproquement, des résultats de l'autre système ( S1, S2 ), notamment en comparant chacun le résultat de la tâche de l'autre des deux systèmes ( S1, S2 ) à son propre résultat de la tâche,
et dans lequel il est prévu que, lorsqu'un défaut est détecté, ou notamment lorsqu'il est détecté un écart des résultats entre eux, on constate un cas de défaut,
dans lequel il est prévu, dans le cas d'un défaut, de choisir pour le fonctionnement productif ou de confirmer pour le fonctionnement productif, l'un des systèmes ( S1, S2 ), **caractérisé**
**en ce qu'**il est prévu, en outre,
que pour chacun des systèmes ( S1, S2 ), on relève dans plusieurs cycles ou dans tous les cycles, respectivement, au moins une grandeur caractéristique sur un paramètre de fonctionnement et on l'utilise pour la mise à jour d'au moins un paramètre statistique,
**en ce que**, au moins dans le cas où l'on constate un écart de résultat entre les deux systèmes ( S1, S2 ), on met en rapport, pour chaque système ( S1, S2 ), un paramètre de fonctionnement en cours avec le paramètre statistique associé, et
**en ce que** le système ( S1, S2 ), pour lequel le paramètre de fonctionnement en cours s'écarte le moins du paramètre statistique associé, est détecté comme le système ( S1, S2 ) fonctionnant en bon ordre et est utilisé pour le fonctionnement productif.

8. Agencement suivant la revendication 7,
**caractérisé**
**en ce qu'**il est prévu
qu'on utilise, comme paramètre de fonctionnement, un temps de déroulement d'un programme, notamment un temps de déroulement pour l'élaboration d'un cycle complet ou d'une partie d'un programme élaborée, respectivement, dans un cycle.

9. Agencement suivant l'une des revendications 7 ou 8,
**caractérisé**
**en ce qu'**il est prévu
que l'on utilise comme paramètre de fonctionnement au moins un indicateur de performance pour indiquer un indice de puissance du système ( S1, S2 ) respectif.

10. Agencement suivant l'une des revendications 7 à 9,
**caractérisé**
**en ce qu'**il est prévu
qu'on relève une pluralité de grandeurs caractéristiques comme paramètres de fonctionnement et on les rassemble en un jeu de paramètres statistiques ou en un paramètre statistique d'ensemble unique.

11. Agencement suivant l'une des revendications 7 à 10,
**caractérisé**
**en ce qu'**il est prévu
que, dans un programme d'application, on insère au système ( S1, S2 ), qui est élaboré à chaque cycle, des instructions de détection du ou des paramètres de fonctionnement.

12. Agencement suivant la revendication 11,
**caractérisé**
**en ce qu'**il est prévu
que l'on insère les instructions dans un certain nombre de blocs de programme, qui sont élaborés indépendamment de bifurcations ou de conditions dans chaque cycle.
